# EUROPEAN PATENT APPLICATION

(11) **EP 2 799 919 A1**
(43) Date of publication of application: **05.11.2014**
(21) Application number: 12862755.1
(22) Date of filing: 16.07.2012
(51) Int. Cl.: G02B 6/42

(54) **MOUNTING AND FIXING STRUCTURE FOR OPTICAL FIBRE OF PHOTOELECTRON DEVICE**

(30) Priority: 29.12.2011 CN 201110450288
(71) Applicant: Wuhan Telecommunication Devices Co., Ltd., Hubei 430074 (CN)
(72) Inventor: LV, Nina, Wuhan Hubei 430074 (CN); LIN, Xuefeng, Wuhan Hubei 430074 (CN); ZHOU, Dan, Wuhan Hubei 430074 (CN)
(74) Representative: Hanna, Peter William Derek
(86) International application number: PCT/CN2012/078700
(87) International publication number: WO 2013/097449

(57) **Abstract**

Disclosed is a mounting and fixing structure for an optical fiber of a photoelectron device. The photoelectron device comprises a tube shell (120), with a tail tube (140) extending outwards being arranged on the tube shell (120). One end of an optical fiber is provided with a coupling structure (340), and the optical fiber comprises a fiber core (201) and an envelope (202) which is made of the same material as the fiber core (201) and covers the fiber core. One end of the optical fiber close to the coupling structure (340) forms a bare optical fiber (230) which consists of a fiber core (201) and an envelope (202), and the other end forms a basic optical fiber (200) which consists of a fiber core (201), an envelope (202) and a coating (203); and the optical fiber penetrates into the tail tube (140). The bare optical fiber (230) of the optical fiber is welded and fixed to the tail tube (140) through glass solder (160). The mounting and fixing structure for an optical fiber has the advantages of a simple structure and process, lower time consumption and a low cost, and provides high usage reliability while meeting the requirement of gas tightness.

## Description

### Field of the Invention

The present invention relates to a photoelectron device, in particular to an optical fiber-mounted photoelectron device with excellent gas tightness.

### Background of the Invention

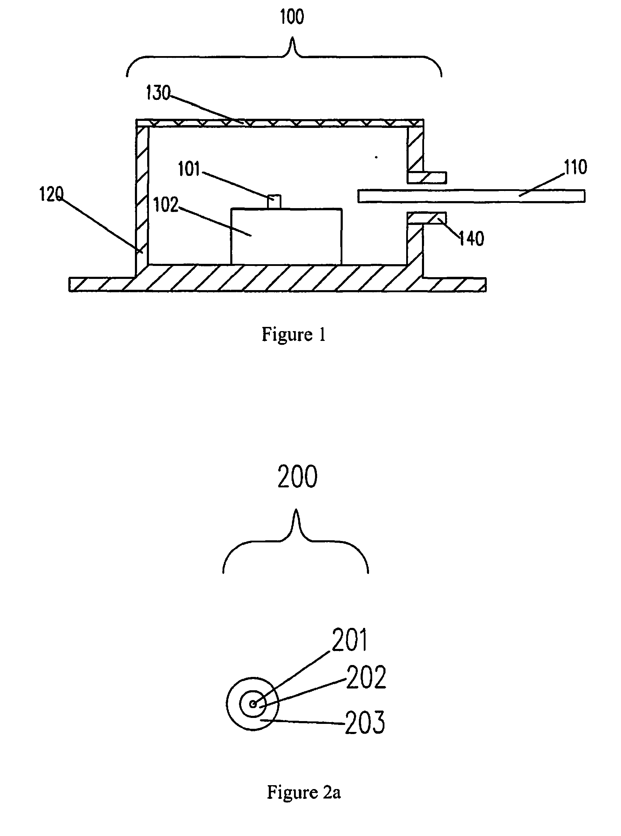

Photoelectron devices in the field of optical communication includes many active type devices, such as optical emitter, optical detector, optical amplifier and the like, and many passive type devices, such as optical coupler, optical wavelength division multiplexer/demultiplexer, optical isolator, optical filter and the like. As shown in Fig. 1, light conduction between the various photoelectron devices 100 and the outside is mostly achieved with an optical fiber 110 of certain standard specifications, to realize the transmission of light signals and light energy between the outside and the photoelectron device 100. The mounting shell of the photoelectron device 100, also referred to as tube shell, consists generally of a tube body 120 and a tube closure 130. The tube body 120 may be a cubic butterfly type, a dual-in-line type, a cylindrical coaxial type or many other types, and may be made of such materials as Kovar (iron-cobalt-nickel alloy), stainless steel, tungsten copper or other metals. One or more through holes are formed on the tube body 120 and often fabricated in a metallic tubular structure, which is known as tail tube 140. The optical fiber 110 is optically coupled, through the tail tube 140, with a photoelectric function unit 101 mounted inside the tube body 120, and mounting and fixing of the optical fiber 110 are achieved by means of the tail tube 140. Wherein, the photoelectric function unit 101 may include a variety of elements, such as optical emitter chip, optical detector chip, optical amplifier chip, optical waveguide chip, optical lens, optical fiber, collimator, electronic chip, cushion block, fixed support and the like, and combinations thereof. In addition, a substrate 102 is usually arranged inside the tube shell of the photoelectron device 100, enabling mounting of the photoelectric function unit 101 above the substrate 102. The mounting and fixing part of the optical fiber 110 in the tail tube 140 needs to meet the demand on a certain gas tightness, in order to prevent external water vapor and other environmental substances from entering the device and causing damages to the functional elements, as well as to ensure long and stable operation of the photoelectron device. Typically, upon completion of the mounting of the internal elements as well as the coupling and fixation of the optical fiber 110, the entire device will be put in an inert gas environment (e.g. nitrogen) with low water vapor to accomplish seal-capping of the tube body 120, that is, the tube closure 130 is hermetically welded to the tube body 120 to create, inside the entire device, a fully-sealed environment that meets the demand on a certain gas tightness; at this point, the basic fabrication procedure of the device is finished.

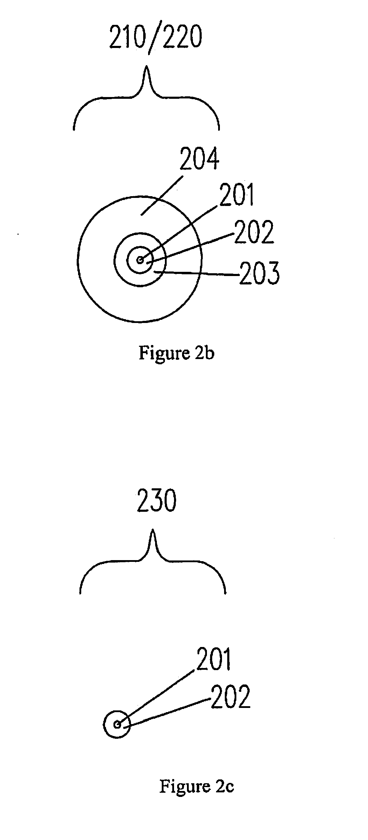

Shown in Fig.2a is a schematic diagram of the cross-sectional structure of a quartz substrate basic optical fiber 200 that is commonly used in the industry. The quartz substrate basic optical fiber 200 includes a fiber core 201, an envelope 202 covering the fiber core 201 and a coating 203 covering the envelope 202, wherein the fiber core 201 and the envelope 202 are made of quartz, and constitute a bare optical fiber 230 as shown in Fig.2c, which typically has a standard outer diameter of 125 microns; the coating 203 is made of Acrylate and typically has a standard outer diameter of 250 microns. The coating 203 plays a primary role in protecting the slender and fragile bare optical fiber 230 including the fiber core 201 and the envelope 202, enabling the formed basic optical fiber 200 to be hardly ruptured or damaged under bending, twisting, axial pulling and other such situations. During the production and use of the photoelectron device, various operations need to be frequently applied to the optical fiber and the product is under various risky application environments, therefore, a protective jacket layer 204 is usually added outside the coating 203, as shown in Fig.2b, in order to prevent any possible external damage to the coating 203 from imparting a negative effect upon the protection for the internal quartz fiber and to improve the various mechanical strength properties of the optical fiber itself. A common outer diameter specification of 0.9 millimeters is employed for the protective jacket layer 204. The protective jacket layer 204 may be classified into two types: tight type and loosened type, based upon how it is added. A tight optical fiber 210 refers to the fact that the protective jacket layer 204 is formed by secondary coating on the basis of the foregoing basic optical fiber 200, and it may be made of various polymers, such as Hytrel (polyester resin), PVC (polyvinyl chloride), Nylon (polyamide fiber), Polyimide (polyimide) and the like. A loosened optical fiber 200 refers to the fact that a protective jacket layer (tube) 204 is fabricated separately and then added onto the basic optical fiber 200 mechanically, as a result, the protective jacket layer 204 of the loosened optical fiber 200 has an inner diameter slightly larger than the outer diameter of the coating 203 of the basic optical fiber 200. The loosened protective jacket layer 204 may be made of ETFE (Ethylene Tetra Fluoro Ethylene copolymer) and other such materials.

As for the mounting and fixing of the gas-tightness-meeting optical fiber 110 of the photoelectron device 100 on the tube body 120, such a scheme is generally adopted in the industry: the optical fiber 110 is metalized and then mounted and fixed by metal solder welding, wherein metallization of the optical fiber 110 is classified into two types: tight optical fiber 210-based metallization and basic optical fiber 200-based metallization.

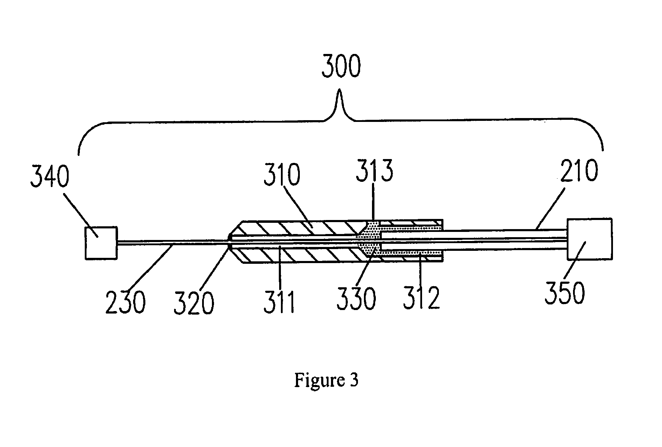

Shown in Fig.3 is a typical structure of a metalized optical fiber module 300 that is fabricated using the tight optical fiber 210, wherein, a section of the protective jacket layer 204 and the coating 203 is peeled off on one end of the tight optical fiber 210, so as to expose the bare optical fiber 230 that typically has a diameter of 125 microns; the entire surface of a metal sleeve 310 is gold-plated, the metal sleeve has a structural shape as shown in Fig.3 and may also be in other shapes, and one end of the metal sleeve is a thin tube 311 only for passage of the bare optical fiber 230, while the other end is a thick tube 312 for entrance of the tight optical fiber 210. The bare optical fiber 230 penetrates into the metal sleeve 310 through the thick tube 312 of the metal sleeve 310 and out of the metal sleeve 310 through one end of the thin tube 311, and the tight optical fiber 210 on the rear part of the metal sleeve is located in the thick tube 312 of the metal sleeve 310. The surface of the bare optical fiber 230 needs to be pre-metalized in advance, i.e. gold-plated, and then, the bare optical fiber 230 with the surface gold-plated is hermetically welded together with the metal sleeve 310 at the end of the thin tube 311 of the metal sleeve 310. Fixing glue 330 is inwardly filled in the thick tube 312 of the metal sleeve 310 along the inner wall thereof, achieving secure bonding between the tight optical fiber 210 and the metal sleeve 310. A side hole 313 is formed on the part of the thick tube 312 of the metal sleeve 310 close to the location where the thick tube 312 and the thin tube are combined, and the side hole is used for exhausting the air in the tube during glue filling and also for observation for glue filling. The tail end of the bare optical fiber 230 is processed or fabricated into a coupling structure 340 for optical coupling, the coupling structure 340 may be an optical fiber itself with a planar or oblique end face, and may also be various elements, such as optical fiber lens, collimator, optical lens, fixing support and the like, and combinations thereof. The other end of the tight optical fiber 210 is provided with a standard connection adapter 350, e.g. SC, LC, MU, ST standard adapter types, and this adapter is used for connection with other objects having a corresponding adapter port.

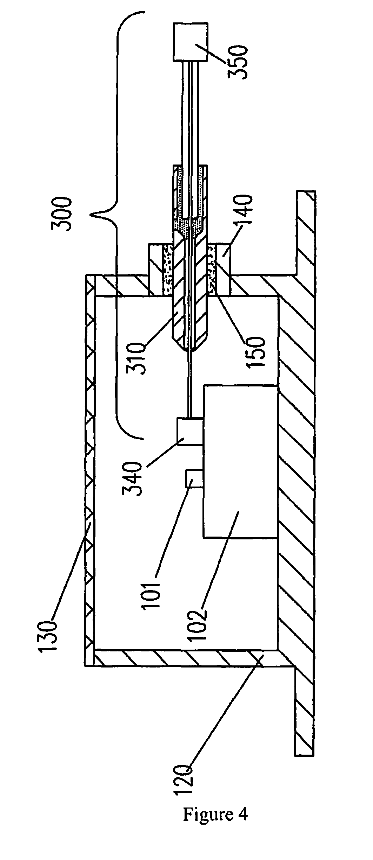

Shown in Fig. 4 is a typical mounting and fixing situation of the metalized optical fiber module 300 of the tight optical fiber 210 in the tube body 120. Wherein, the photoelectric function unit 101 is located on a certain mounting substrate 102 inside the tube body 120, and the inner surface of the tail tube 140 of the tube body 120 is gold-plated. The metalized optical fiber module 300 penetrates into the tube body 120 from the tail tube 140; the coupling structure 340 may be fixed on the mounting substrate 102 in many fixing ways, such as glue adhesion, laser welding and solder welding, after coupling alignment between the coupling structure 340 and the photoelectric function unit 101 is achieved, afterwards, the metal sleeve 310 of the metalized optical fiber module 300 and the tail tube 140 of the tube body 120 are hermetically welded together through metal solder 150; alternatively, fixation of the coupling structure 340 may be directly achieved by means of hermetical welding between the metal sleeve 310 and the tail tube 140 through the metal solder 150.

For the metallization and the welding-type mounting and fixing of the basic optical fiber 200, reference may be made to the situations of the tight optical fiber 210 in Fig.3 and Fig.4, and these situations differ from each other mainly in that: the tight optical fiber 210 is replaced by the basic optical fiber 200. In addition, the other end of the basic optical fiber 200 is generally not provided with the standard connection adapter 350 at this moment, and instead, is used by a client for direct fusion-welding connection with another part of the optical fiber in a product of the client. The purpose of such applications is to reduce the spatial volume for the optical fibers and mutual connection thereof. The optical fibers only exist inside the products under such applications and are not used externally, so the basic optical fiber 200 can be used without adding the protective jacket layer 204 thereto.

Those technologies for metallization of the above-mentioned optical fiber and mounting and fixing thereof on the tube body have already been widely applied in the industry; they are all featured by excellent gas tightness, but such defects as complex structure and process, high cost and large time consumption still exist. With the rapid development of optical communication technology application, there has been an increasing demand on the cost of photoelectron devices, and the cost problem of the metalized optical fibers has become increasingly prominent. In addition, in the case that the process for mounting and fixing by welding of the metalized optical fiber and the metal solder is adopted, thermal stress resulted from the metal and the solder thereof is likely to result in positional movement of the coupling structure 340 under an environmental temperature change, and under some extreme situations, is also likely to result in rupture of the bare optical fiber 230, which is extremely fragile in structure. In a few new products with a higher demand on coupling, this problem has appeared and become prominent, and the existing technologies for mounting and fixing of the optical fiber have become highly unsuitable for continued use.

### Summary of the Invention

Given all this, it is thus a major objective of the present invention to provide a mounting and fixing structure for an optical fiber of a photoelectron device, which is simple in structure and process, low in cost and reliable in use.

To reach the objective mentioned above, provided in the present invention is a mounting and fixing structure for an optical fiber of a photoelectron device. The photoelectron device includes a tube shell, a substrate is arranged inside the tube shell, a photoelectric function unit is mounted on the substrate, and a tail tube extending outwards is arranged on the tube shell; and the mounting and fixing structure is characterized in that, one end of the optical fiber is provided with a coupling structure, and the optical fiber includes a fiber core and an envelope which is made of the same material as the fiber core and covers the fiber core; the envelope away from one end of the coupling structure is covered by a coating; one end of the optical fiber close to the coupling structure forms a bare optical fiber which consists of the fiber core and the envelope, and the other end of the optical fiber away from the coupling structure forms a basic optical fiber which consists of the fiber core, the envelope and the coating; the optical fiber penetrates into the tail tube, the coupling structure is located inside the tube shell and corresponding to the photoelectric function unit, and the bare optical fiber of the optical fiber is welded and fixed to the tail tube through glass solder.

A partial section of the bare optical fiber close to the coupling structure is covered by the coating, this section forms the basic optical fiber, and the bare optical fiber exposed out of this section of the basic optical fiber is welded and fixed to the tail tube through the glass solder.

A connecting sleeve is arranged on the tail tube outside the tube shell, one end of the connecting sleeve is sleeved on the tail tube and the other end is accommodated on one end of the basic optical fiber located outside the tail tube, and filling glue is injected between the connecting sleeve and the tail tube as well as between the connecting sleeve and the accommodated basic optical fiber.

A side hole is arranged on the connecting sleeve.

A stepped hole is arranged inside the tail tube, the stepped hole forms a thin inner tube of the tail tube towards one side of the tube shell, the stepped hole forms a thick inner tube of the tail tube against one side of the tube shell, the glass solder is disposed on a step formed between the stepped hole and the thin inner tube of the tail tube, the bare optical fiber is accommodated in the thin inner tube, one end of the basic optical fiber away from the coupling structure is accommodated in the thick inner tube, and filling glue is injected between the thick inner tube, and the basic optical fiber accommodated therein and the glass solder.

A side hole is arranged on the thick inner tube.

Preferably, the basic optical fiber away from the coupling structure is covered by a protective jacket layer, the basic optical fiber and the protective jacket layer form a jacket layer optical fiber, and a standard connection adapter is arranged on one end of the jacket layer optical fiber away from the coupling structure.

A connecting sleeve is arranged on the tail tube outside the tube shell, one end of the connecting sleeve is sleeved on the tail tube and the other end is accommodated on one end of the jacket layer optical fiber located outside the tail tube, and filling glue is injected between the connecting sleeve and the tail tube as well as between the connecting sleeve and the accommodated jacket layer optical fiber.

A side hole is arranged on the connecting sleeve.

A stepped hole is arranged inside the tail tube, the stepped hole forms a thin inner tube of the tail tube towards one side of the tube shell, the stepped hole forms a thick inner tube of the tail tube against one side of the tube shell, the glass solder is disposed on a step formed between the stepped hole and the thin inner tube of the tail tube, the bare optical fiber is accommodated in the thin inner tube, one end of the jacket layer optical fiber is accommodated in the thick inner tube, and filling glue is injected between the thick inner tube, and the jacket layer optical fiber accommodated therein and the glass solder.

A side hole is arranged on the thick inner tube.

The tail tube is made of a Kovar alloy material.

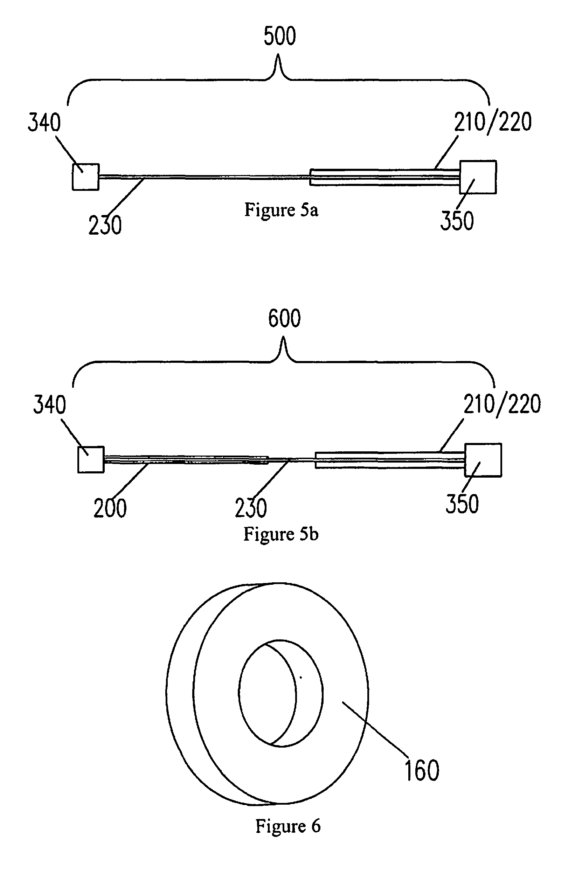

Herein, in respect of the quartz substrate optical fiber that is commonly used in the industry, the bare optical fiber in the present invention is the bare optical fiber 230 with the external protective layers, such as the coating 203 and the protective jacket layer 204, being removed, and the bare optical fiber 230 typically has a standard diameter of 125 microns; the basic optical fiber 200 consisting of the bare optical fiber 230 and the coating 203 typically has a standard diameter of 250 microns; the jacket layer optical fiber, i.e. the tight optical fiber 210 or the loosened optical fiber 220, which is formed by adding the protective jacket layer 204 outside the basic optical fiber 200, has a common standard outer diameter of 0.9 millimeters. The glass solder involved in the present invention is low-temperature glass solder in particular, which is mainly a mixture with a feature of glassy state formed by a plurality of metallic and nonmetallic oxides based on a particular ratio and which has a softening point generally ranging from 280'C to 400 °C; the low-temperature glass solder has a major component of lead oxide, low-temperature glass solder materials with different physical indexes are obtained by addition of other components and ratio adjustment, and the relevant physical indexes include softening point, viscosity, coefficient of thermal expansion, surface wettability, etc. The low-temperature glass solder may be prefabricated as needed in various different geometrical shapes, and is referred to as preformed glass solder, for example, a glass solder ring 160 as shown in Fig.6. An excellent gastight welding contact could be formed between the low-temperature glass solder, and the bare optical fiber made of quartz or other glass materials that are probably applied to the optical fiber, and meanwhile, the Kovar alloy also has a low coefficient of thermal expansion similar to that of the glass materials, thus an excellent gastight welding contact could also be formed between the low-temperature glass solder and the tail tube made of the Kovar alloy material.

The mounting and fixing structure for an optical fiber of a photoelectron device set forth in the present invention does not need the mounting and fixing technologies featured by metallization of the optical fiber and welding through the metal solder thereof, is simple in structure and process and accordingly small in time consumption and low in cost, and simultaneously, overcomes the possible negative effect of thermal stress (which results from the existing mounting and fixing processes featured by metallization of the optical fiber and welding through the metal solder thereof) upon the coupling reliability of the photoelectron device. In respect of the quartz substrate optical fiber that is commonly used in the industry, since the bare optical fiber and the low-temperature glass solder with quite small and similar coefficients of thermal expansion, as well as the structure welded to the Kovar material-made tail tube are used in the mounting and fixing structure for an optical fiber of a photoelectron device in the present invention, the gas tightness of the mounting and fixing structure under an environmental temperature change will be guaranteed, the same level of gas tightness as the existing mounting and fixing technologies featured by metallization of the optical fiber and welding through the metal solder thereof can be reached, and better reliability in resisting moisture and other adverse environmental factors is given to the mounting and fixing structure. Simultaneously, under the mounting and fixing structure for an optical fiber of a photoelectron device set forth in the present invention, the optical fiber will also be given a variety of sufficient mechanical strength properties and protection capability, hence, the mounting and fixing structure can be used in the application of various photoelectron devices.

### Brief Description of the Drawings

Fig.1 is a schematic diagram showing the basic mounting and fixing structure of an optical fiber in a photoelectron device;
Fig.2a is a schematic diagram showing the cross-sectional structure of a commonly-used quartz substrate basic optical fiber in the industry;
Fig.2b is a schematic diagram showing the cross-sectional structure of the commonly-used quartz substrate basic optical fiber in the industry, which is added with a protective jacket layer outside;
Fig.2c is a schematic diagram showing the cross-sectional structure of a bare optical fiber inside the commonly-used quartz substrate basic optical fiber in the industry;
Fig.3 is a schematic diagram showing the typical structure of a metalized optical fiber module in the prior art, which is fabricated using a tight optical fiber;
Fig.4 is a schematic diagram showing the typical mounting and fixing structure in the prior art, in which the metalized tight optical fiber module is adopted in the photoelectron device;
Fig.5a is a schematic diagram showing the structure of a non-metalized optical fiber module used in the present invention;
Fig.5b is a schematic diagram showing the structure of another non-metalized optical fiber module used in the present invention;
Fig.6 is a schematic diagram showing the three-dimensional shape of a preformed low-temperature glass solder material used in the present invention;
Fig.7a is a schematic diagram showing a specific structure of embodiment 1 of the mounting and fixing structure for an optical fiber of a photoelectron device in the present invention;
Fig.7b is a schematic diagram showing another specific structure of embodiment 1 of the mounting and fixing structure for an optical fiber of a photoelectron device in the present invention;
Fig.8a is a schematic diagram showing a supplementary structure for the specific structure, as shown in Fig.7a, of embodiment 1 of the mounting and fixing structure for an optical fiber of a photoelectron device in the present invention;
Fig. 8b is a schematic diagram showing a supplementary structure for the specific structure, as shown in Fig.7b, of embodiment 1 of the mounting and fixing structure for an optical fiber of a photoelectron device in the present invention;
Fig.9a is a schematic diagram showing a specific structure of embodiment 2 of the mounting and fixing structure for an optical fiber of a photoelectron device in the present invention;
Fig. 9b is a schematic diagram showing a simplified structure for the specific structure, as shown in Fig.9a, of embodiment 2 of the mounting and fixing structure for an optical fiber of a photoelectron device in the present invention;
Fig.10 is a schematic diagram showing a varied structure of the aforementioned embodiments of the mounting and fixing structure for an optical fiber of a photoelectron device in the present invention.

### Detailed Description of the Embodiments

For ease of a further understanding of the structure of the present invention and the effect reached, detailed description will now be made below in the example of the preferred embodiments by reference to the accompanying drawings.

In respect of the quartz substrate optical fiber that is commonly used in the industry, an optical fiber module 500, as shown in Fig. 5a, is adopted in the present invention, wherein the part of the optical fiber connected with the coupling structure 340 is the bare optical fiber 230, and the part connected with the standard connection adapter 350 is the jacket layer optical fiber, i.e. the tight optical fiber 210 or the loosened optical fiber 220. Compared with the metalized optical fiber module 300 used in the prior art, the optical fiber module 500 is a non-metalized optical fiber module, with the metal sleeve 310 being removed and the surface of the bare optical fiber 230 being not metalized, i.e. gold-plated. Alternatively, a non-metalized optical fiber module 600, as shown in Fig.5b, is adopted in the present invention, and differs from the above-mentioned non-metalized optical fiber module 500 in that the part of the optical fiber connected with the coupling structure 340 is the basic optical fiber 200 with the coating 203 being reserved, and a section of the bare optical fiber 230 is exposed only between the basic optical fiber 200 and the jacket layer optical fiber on the other side, i.e. the tight optical fiber 210 or the loosened optical fiber 220.

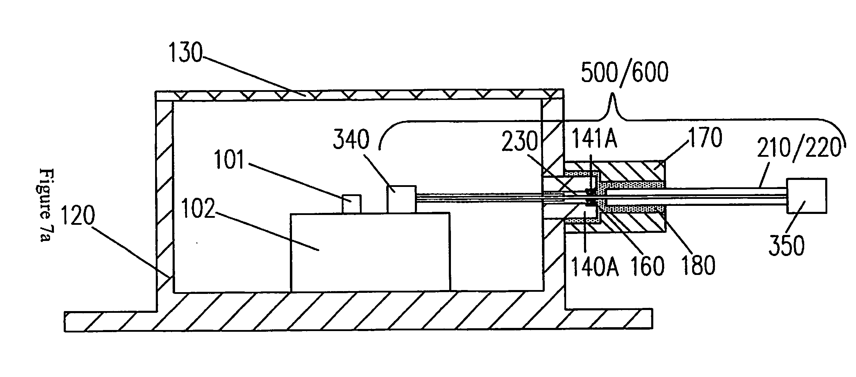

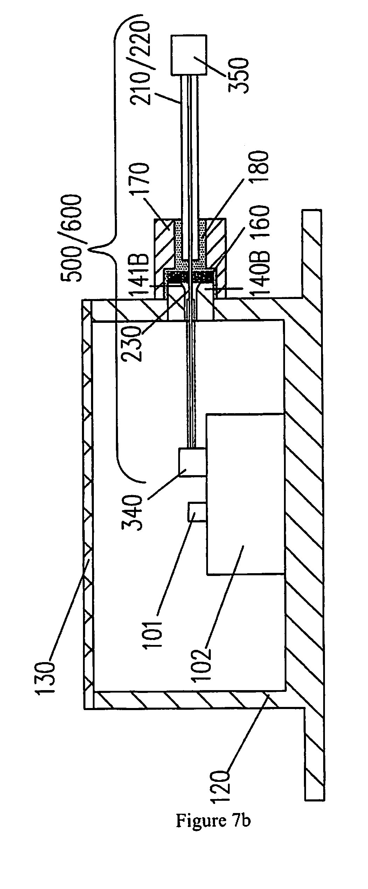

As shown in Fig.7a and Fig.7b, i.e. the schematic diagrams of embodiment 1 of the mounting and fixing structure for an optical fiber of a photoelectron device in the present invention, the mounting and fixing structure includes the above-mentioned non-metalized optical fiber module 500/600. Wherein, as shown in Fig.7a, a stepped hole 141A is fabricated at the opening of a tail tube 140A of the tube body 120, and the ring-shaped preformed low-temperature glass solder 160 having a corresponding size, as shown in Fig.6, is disposed in the stepped hole 141A; alternatively, as shown in Fig.7b, a chamfered opening 141 B is processed at the opening of a tail tube 140B of the tube body 120, and the ring-shaped preformed low-temperature glass solder 160 having a corresponding size, as shown in Fig.6, is disposed above the chamfered opening 141B. The non-metalized optical fiber module 500/600 penetrates through the tail tube 140A/140B and the low-temperature glass solder ring 160, and a part of the bare optical fiber 230 of the non-metalized optical fiber module 500/600 is located in the low-temperature glass solder ring 160 and at certain locations in front of and in back of the low-temperature glass solder ring 160. After the coupling structure 340 of the non-metalized optical fiber module 500/600 is coupled and/or fixed, the tail tube 140A/140B is heated using a common method in the prior art, e.g. solder-resist heating or induction heating, to melt the low-temperature glass solder 160, the molten glass solder enters and then fills the gaps between the bare optical fiber 230 and the tail tube 140A/140B, and the bare optical fiber 230 and the tail tube 140A/140B are hermetically welded and fixed together after the molten glass solder is cooled and solidified.

Wherein, in respect of the situation where the opening of the tail tube 140A is fabricated into the stepped hole 141A as shown in Fig.7a, both the mode of arranging the tail tube 140A horizontally and the mode of arranging the tail tube 140A vertically (the mode of arranging the tail tube vertically refers to the fact that the tube body 120 is arranged with the tail tube 140A facing upwards) could be employed for the preformed low-temperature glass solder ring 160 disposed inside the stepped hole 141A, thus the preformed low-temperature glass solder ring 160 is heated and molten; wherein, in respect of the situation where the tail tube 140A is arranged horizontally, all the gaps between the bare optical fiber 230 and the inner wall of the tail tube 140A could still be evenly filled with the molten low-temperature glass solder 160 under a capillary effect by designing an appropriate inner diameter of the tail tube 140A, thereby achieving the desired hermetical welding. In respect of the situation where the opening of the tail tube 140B is processed into the chamfered opening 141B as shown in Fig.7b, the tail tube 140B needs to be arranged vertically since the preformed low-temperature glass solder 160, as shown in Fig.6, needs to be disposed at the chamfered opening 141B.

After the bare optical fiber 230 of the non-metalized optical fiber module 500/600 is welded and fixed to the tail tube 140A/140B through the low-temperature glass solder 160, a connecting sleeve 170 is enabled to be in fit connection with the tail tube 140A/140B through the tight or loosened optical fiber of the non-metalized optical fiber module 500/600 outside the tail tube 140A/140B, and the other end of the connecting sleeve 170 is in fit connection with the tight or loosened optical fiber. Depending upon the requirements of specific applications, the connecting sleeve 170 probably needs to be pre-sleeved on the tight optical fiber 210 or the loosened optical fiber 220 of the non-metalized optical fiber module 500/600; and correspondingly, the standard connection adapter 350 of the non-metalized optical fiber module 500/600 may be either pre-assembled or post-assembled on the tight optical fiber 210 or the loosened optical fiber 220 of the non-metalized optical fiber module 500/600.

Then, filling glue 180 is injected between the connecting sleeve 170 and the tail tube 140A/140B as well as between the connecting sleeve 170 and the fit-connection part of the tight or loosened optical fiber of the non-metalized optical fiber module 500/600, so as to complete their mutual fixation.

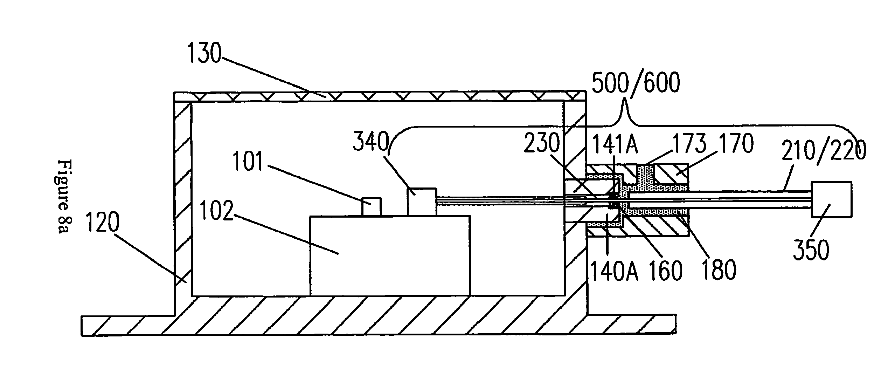

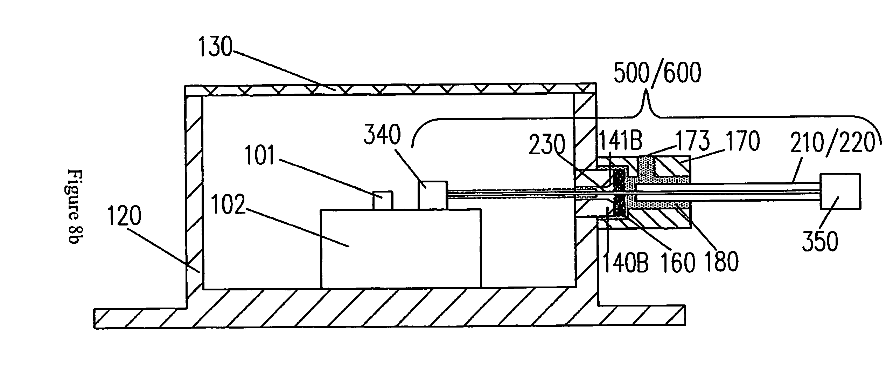

In respect of the above-mentioned embodiments, a side hole 173 may also be fabricated on the connecting sleeve 170, as shown in Fig.8a and Fig. 8b, in order to facilitate injection of the filling glue 180 during mounting and fixing.

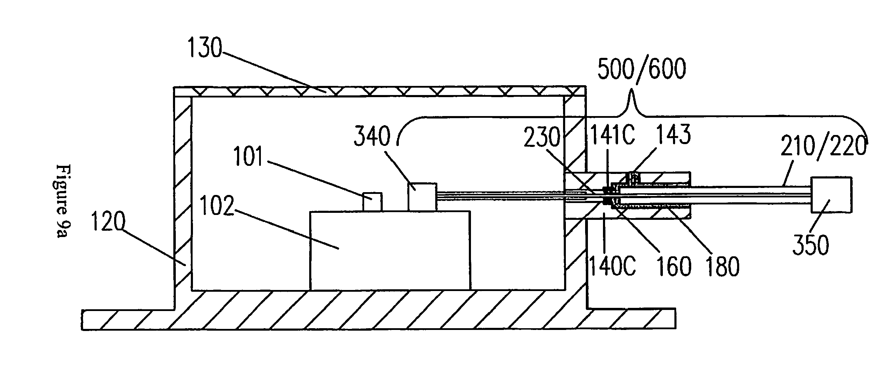

As shown in Fig.9a, i.e. the schematic diagram of embodiment 2 of the mounting and fixing structure for an optical fiber of a photoelectron device in the present invention, the mounting and fixing structure includes the foregoing non-metalized optical fiber module 500/600. Wherein, a stepped hole 141C is fabricated inside the tail tube 140C of the tube body 120, the stepped hole forms a thin inner tube part of the tail tube 140C towards one side of the tube body 120 and forms a thick inner tube part of the tail tube 140C against one side of the tube body 120; the step refers mainly to the one formed between the stepped hole 141C and the thin inner tube of the tail tube 140C, so that the ring-shaped preformed low-temperature glass solder 160 having a corresponding size, as shown in Fig.6, can be disposed on the step, whereas the step, as shown in Fig.9a, may be or may not be arranged between the stepped hole 141C and the thick inner tube of the tail tube 140C; wherein, the thick inner tube of the tail tube 140C, which is formed by the stepped hole against one side of the tube body 120, is used for accommodating the tight optical fiber 210 or the loosened optical fiber 220 of the non-metalized optical fiber module 500/600. Along the thick inner tube of the tail tube 140C as shown in Fig.9a, the low-temperature glass solder ring 160 is disposed on the step where the stepped hole 141C is connected with the thin inner tube of the tail tube 140C, the non-metalized optical fiber module 500/600 penetrates through the tail tube 140C and the low-temperature glass solder ring 160, and a part of the bare optical fiber 230 of the non-metalized optical fiber module 500/600 is located in the low-temperature glass solder ring 160 and at certain locations in front of and in back of the low-temperature glass solder ring 160. After the coupling structure 340 of the non-metalized optical fiber module 500/600 is coupled and/or fixed, the tail tube 140C is heated to melt the low-temperature glass solder 160, the molten glass solder enters and then fills the gaps between the bare optical fiber 230 and the thin inner tube of the tail tube 140C, and the bare optical fiber 230 and the tail tube 140C are hermetically welded and fixed together after the molten glass solder is cooled and solidified.

In respect of the situation in this embodiment where the stepped hole 141C is fabricated inside the tail tube 140C, which is the same as the situation in the foregoing embodiment where the stepped hole 141A is fabricated at the opening of the tail tube 140A as shown in Fig.7a and Fig. 8a, both the mode of arranging the tail tube 140C horizontally and the mode of arranging the tail tube 140C vertically could be employed for the preformed low-temperature glass solder 160 that is disposed on the step where the stepped hole 141C is connected with the thin inner tube of the tail tube 140C, thus the low-temperature glass solder at this location is heated and molten, and hermetical welding between the bare optical fiber 230 and the inner wall of the thin inner tube of the tail tube 140C is achieved.

Wherein, a side hole 143 is arranged on the thick inner tube, which is formed by the stepped hole 141C against one side of the tube body 120. After the bare optical fiber 230 is welded and fixed to the thin inner tube of the tail tube 140C through the low-temperature glass solder 160, the filling glue 180 is injected between the tight or loosened optical fiber located in the thick inner tube of the tail tube 140C, and this part of the tail tube and the low-temperature glass solder 160 through the side hole 143 on the thick inner tube of the tail tube 140C or the opening of the tail tube 140C, thus the tight optical fiber 210 or the loosened optical fiber 220 of the non-metalized optical fiber module 500/600 is fixed in the tail tube 140C.

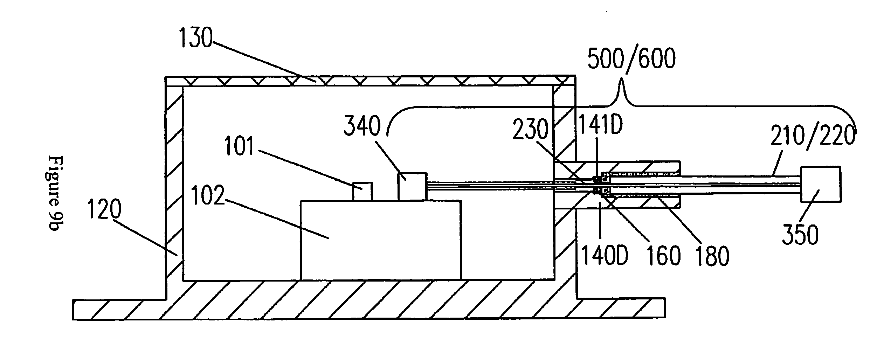

As shown in Fig.9b, as a possible simplified structure of the embodiment shown in Fig.9a, the above-mentioned side hole 143 on the tail tube 140C may be removed to form a side hole-free tail tube 140D. The tight optical fiber 210 or the loosened optical fiber 220 of the non-metalized optical fiber module 500/600 is fixed in the tail tube 140D only by injecting the filling glue 180 through the opening of the tail tube 140D.

Particularly, in addition to the non-metalized optical fiber module 500/600 used in the foregoing mounting and fixing structure for an optical fiber in the present invention as well as the situations described in the various embodiments above, the tight optical fiber 210 or the loosened optical fiber 220 in the used non-metalized optical fiber module 500/600, which is connected with the standard connection adapter 350, may also be the basic optical fiber 200, and at this moment, this part of the basic optical fiber 200 is not assembled and connected with the standard connection adapter 350 in general, and instead, is in direct fusion-welding connection with another part of the optical fiber. Wherein particularly, in respect of the situation where the coupling structure 340 of the non-metalized optical fiber module 500/600 has a larger size than the inner diameter of the tail tube 140A/140B/140C/140D of the tube body 120, the optical fiber part of the non-metalized optical fiber module 500/600, which is used for connection with the exterior of the tube body 120, needs to be in the form of the basic optical fiber 200 at first, enabling the optical fiber of the non-metalized optical fiber module 500/600 to penetrate out of the tail tube 140A/140B/140C/140D through the interior of the tube body 120; after that, the protective jacket layer 204 may be sleeved on the basic optical fiber 200 according to the requirements of the applications, so as to form the loosened optical fiber 220, and assembly of the standard connection adapter 350 is completed.

Particularly, in addition to the descriptions above, the tail tube 140A/140B/140C/140D and the connecting sleeve 170 in the mounting and fixing structure for an optical fiber of a photoelectron device set forth in the present invention may be tubular structures with the cross section being circular, rectangular or in other shapes. The mounting and fixing structure for an optical fiber of a photoelectron device set forth in the present invention involves a situation where one optical fiber is mounted and fixed and also a situation where a plurality of optical fibers are mounted and fixed, and the mounting and fixing method is the same as the one for an optical fiber in the various embodiments above, and the specific modes of implementation are consistent.

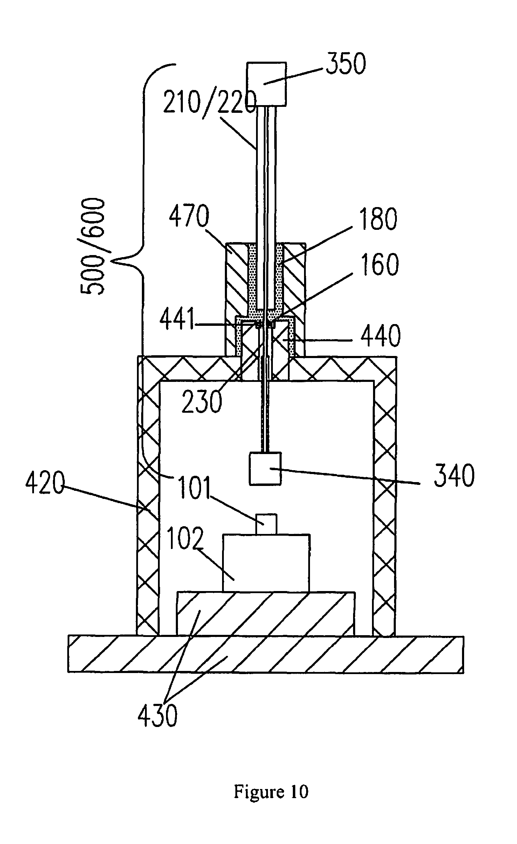

In the mounting and fixing structure for an optical fiber of a photoelectron device set forth in the present invention, the tube body and the tube closure included in the tube shell are a relative concept, that is, in respect of any specific implementation structure, the tube closure (or probably referred to as tube cap) part included in this structure may also - become the tube body part of the mounting and fixing structure for an optical fiber in the present invention, and the tube body (or probably referred to as tube base) part included in this structure may also become the tube closure part of the mounting and fixing structure for an optical fiber in the present invention. Shown in Fig.10 is a certain specific structure situation that exists in accordance with the mounting and fixing structure for an optical fiber of a photoelectron device set forth in the present invention; the mounting and fixing structure includes a tube cap 420 and a tube base 430, wherein the tube cap 420 includes a tail tube 440, a connecting sleeve is arranged outside the tail tube 440, a stepped hole 441 is fabricated at the opening of the tail tube 440, the bare optical fiber 230 of the non-metalized optical fiber module 500/600 penetrating through the tail tube 440 is hermetically welded and fixed to the tail tube 440 through the low-temperature glass solder 160 disposed inside the stepped hole 441, and the filling glue 180 is injected between the connecting sleeve 470 and the tail tube 440 as well as between the connecting sleeve 470 and the fit-connection part of the tight or loosened optical fiber of the non-metalized optical fiber module 500/600, so as to achieve their mutual fixation. It is obvious that this situation falls into the scope defined by the mounting and fixing structure for an optical fiber of a photoelectron device set forth in the present invention.

Described above are the preferred embodiments of the present invention only, rather than defining the scope of protection of the present invention.

## Claims

1. A mounting and fixing structure for an optical fiber of a photoelectron device, the photoelectron device comprising a tube shell, a substrate being arranged inside the tube shell, a photoelectric function unit being mounted on the substrate, and a tail tube extending outwards being arranged on the tube shell, **characterized in that**, one end of the optical fiber is provided with a coupling structure, and the optical fiber comprises a fiber core and an envelope which is made of the same material as the fiber core and covers the fiber core; the envelope away from one end of the coupling structure is covered by a coating; one end of the optical fiber close to the coupling structure forms a bare optical fiber which consists of the fiber core and the envelope, and the other end of the optical fiber away from the coupling structure forms a basic optical fiber which consists of the fiber core, the envelope and the coating; the optical fiber penetrates into the tail tube, the coupling structure is located inside the tube shell and corresponding to the photoelectric function unit, and the bare optical fiber of the optical fiber is welded and fixed to the tail tube through glass solder.

2. The mounting and fixing structure for an optical fiber of a photoelectron device according to claim 1, **characterized in that**, a partial section of the bare optical fiber close to the coupling structure is covered by the coating, this section forms the basic optical fiber, and the bare optical fiber exposed out of this section of the basic optical fiber is welded and fixed to the tail tube through the glass solder.

3. The mounting and fixing structure for an optical fiber of a photoelectron device according to claim 1 or 2, **characterized in that**, a connecting sleeve is arranged on the tail tube outside the tube shell, one end of the connecting sleeve is sleeved on the tail tube and the other end is accommodated on one end of the basic optical fiber located outside the tail tube, and filling glue is injected between the connecting sleeve and the tail tube as well as between the connecting sleeve and the accommodated basic optical fiber.

4. The mounting and fixing structure for an optical fiber of a photoelectron device according to claim 3, **characterized in that**, a side hole is arranged on the connecting sleeve.

5. The mounting and fixing structure for an optical fiber of a photoelectron device according to claim 1 or 2, **characterized in that**, a stepped hole is arranged inside the tail tube, the stepped hole forms a thin inner tube of the tail tube towards one side of the tube shell, the stepped hole forms a thick inner tube of the tail tube against one side of the tube shell, the glass solder is disposed on a step formed between the stepped hole and the thin inner tube of the tail tube, the bare optical fiber is accommodated in the thin inner tube, one end of the basic optical fiber away from the coupling structure is accommodated in the thick inner tube, and filling glue is injected between the thick inner tube, and the basic optical fiber accommodated therein and the glass solder.

6. The mounting and fixing structure for an optical fiber of a photoelectron device according to claim 5, **characterized in that**, a side hole is arranged on the thick inner tube.

7. The mounting and fixing structure for an optical fiber of a photoelectron device according to claim 1 or 2, **characterized in that**, the basic optical fiber away from the coupling structure is covered by a protective jacket layer, the basic optical fiber and the protective jacket layer form a jacket layer optical fiber, and a standard connection adapter is arranged on one end of the jacket layer optical fiber away from the coupling structure.

8. The mounting and fixing structure for an optical fiber of a photoelectron device according to claim 7, **characterized in that**, a connecting sleeve is arranged on the tail tube outside the tube shell, one end of the connecting sleeve is sleeved on the tail tube and the other end is accommodated on one end of the jacket layer optical fiber located outside the tail tube, and filling glue is injected between the connecting sleeve and the tail tube as well as between the connecting sleeve and the accommodated jacket layer optical fiber.

9. The mounting and fixing structure for an optical fiber of a photoelectron device according to claim 8, **characterized in that**, a side hole is arranged on the connecting sleeve.

10. The mounting and fixing structure for an optical fiber of a photoelectron device according to claim 7, **characterized in that**, a stepped hole is arranged inside the tail tube, the stepped hole forms a thin inner tube of the tail tube towards one side of the tube shell, the stepped hole forms a thick inner tube of the tail tube against one side of the tube shell, the glass solder is disposed on a step formed between the stepped hole and the thin inner tube of the tail tube, the bare optical fiber is accommodated in the thin inner tube, one end of the jacket layer optical fiber is accommodated in the thick inner tube, and filling glue is injected between the thick inner tube, and the jacket layer optical fiber accommodated therein and the glass solder.

11. The mounting and fixing structure for an optical fiber of a photoelectron device according to claim 10, **characterized in that**, a side hole is arranged on the thick inner tube.

12. The mounting and fixing structure for an optical fiber of a photoelectron device according to claim 1, **characterized in that**, the tail tube is made of a Kovar alloy material.
